# EUROPEAN PATENT APPLICATION

(11) **EP 2 543 530 A1**
(43) Date of publication of application: **09.01.2013**
(21) Application number: 11425177.0
(22) Date of filing: 04.07.2011
(51) Int. Cl.: B60J 3/02

(54) **Motor vehicle sun visor provided with an extractable appendix**

(71) Applicant: Fiat Group Automobiles S.p.A., 10135 Torino (TO) (IT)
(72) Inventor: Iavasile, Massimo, 10135 Torino (IT)
(74) Representative: Lovino, Paolo

(57) **Abstract**

A sun visor has a plate-shaped body (8); a connecting device (13) is placed near a vertex that joins an upper edge (9) to a first side edge (11) of the body; such connecting device is adapted to swivel about a first rotation axis (15), and is hinged to the plate-shaped body (8) about a second rotation axis (17), which is transverse to the first rotation axis (15) and is substantially parallel to the upper edge (9); the sun visor (7) has also an appendix (23), which extends along a plane substantially parallel to the plate-shaped body (8) and can be extracted from the plate-shaped body (8) in order to extend as an extension of the plate-shaped body (8); the rotation axis (28) of the appendix (23) extends near the upper edge (9) of the plate-shaped body (8) and is orthogonal to the appendix (23).

## Description

The present invention relates to a motor vehicle sun visor provided with an appendix, which can be extracted from a plate-shaped body of the visor to increase the area shielded from light.

The sun visors comprise a substantially rectangular plate-shaped body, which can be manually rotated in the interior compartment about a substantially vertical axis between a front position, which shields from light through the windshield, and a lateral position, which shields from light through the side door window.

Certain sun visors are provided with an appendix that can be laterally extracted, in order to virtually increase the length of the plate-shaped body. In this way, when the sun visor is set in its lateral position, the shielding from light can be increased towards the rear part of the window.

In known solutions, the extractable appendix also has a substantially rectangular shape, and is coupled to the plate-shaped body by means of a guide, so as to slide along a rectilinear direction.

The known solutions of the type just described are not satisfactory, especially in motor vehicles provided with curtain type side air-bag devices, mounted in the interior compartment of the motor vehicle in a longitudinal channel placed above the side door.

In fact, when the appendix intercepts the exiting trajectory of the curtain bag, there is a major impediment to the exiting of said curtain bag and, in particularly adverse conditions, a breaking of the extractable appendix. Said breaking results particularly dangerous since the appendix detaching from the plate-shaped body could injure the occupants of the motor vehicle.

In addition, the sliding of the appendix, with the passage of time, easily generates a clearance in the guide, which in turn generates imprecise positioning, jamming during operation, and/or vibration of the appendix while the motor vehicle is moving.

The aim of the present invention is to provide a motor vehicle sun visor provided with an extractable appendix, that allows to simply and economically solve the problems outlined above.

Produced according to the present invention is a motor vehicle sun visor provided with an extractable appendix, as defined in claim 1.

For a better understanding of the present invention a preferred embodiment is now described, purely by way of example without limitation, with reference to the attached figure, which shows, in perspective, a motor vehicle sun visor provided with an extractable appendix according to the present invention.

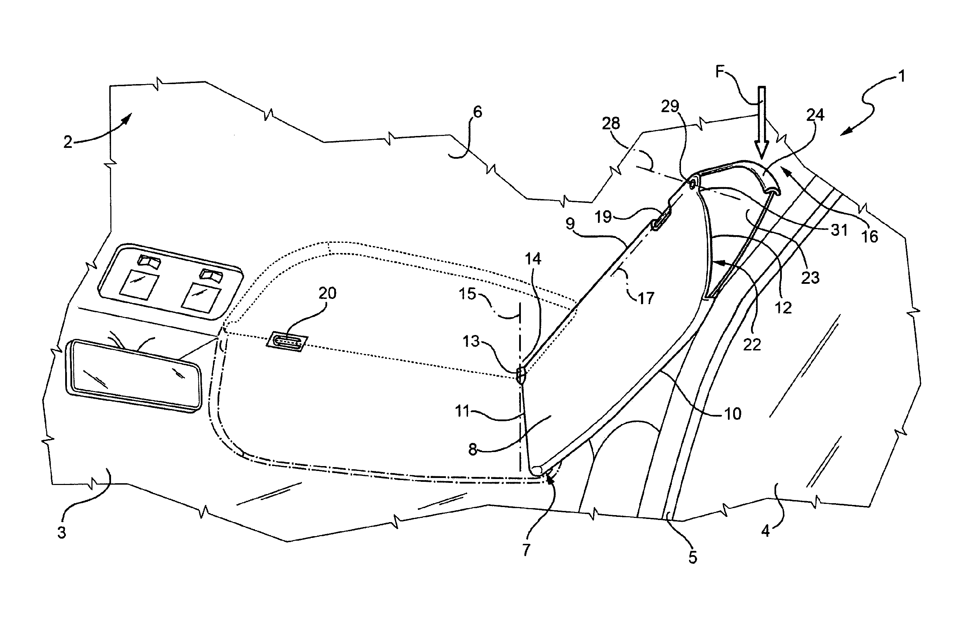

In Figure 1, with 1 is indicated as a whole, a motor vehicle (partially shown) having an interior compartment 2, which is frontally bounded by a windshield 3, laterally by a window 4 of a side door 5, and on top by a panel 6, which is usually called "imperiale" and covers the roof of the motor vehicle 1.

The motor vehicle 1 comprises a sun visor 7 having a plate-shaped body 8 that is elongated so as to present a substantially rectangular or trapezoidal shape, with rounded vertexes. In particular, the plate-shaped body 8 has an upper edge 9, a bottom edge 10, and two side edges 11 and 12 opposite to each other, having a lower length than edges 9, 10.

The plate-shaped body 8 is coupled by a connecting device 13 of a known type to a fixed support 14, defined by a portion of the panel 6 or by another component placed above the windshield 3. The connecting device 13 is placed at one end side of the plate-shaped body 8, substantially at the vertex between the edges 9 and 11, and is hinged to the support 14 so as to let the plate-shaped body 8 swivel about a substantially vertical axis 15 between a front position, facing the windshield 3, and a lateral position, facing the window 4.

When the plate-shaped body 8 is placed in the lateral position, the edge 9 is adjacent and substantially parallel to a longitudinal channel 16, which is placed over the side door 5 and contains a curtain type air-bag device not shown, which in case of an accident is activated in order to expand a curtain bag downwardly to cover the window 4.

The plate-shaped body 8 is hinged to the connecting device 13 so as to swivel about an axis 17 which is transverse to the axis 15, and is adjacent and substantially parallel to the edge 9. In this way, the plate-shaped body 8 can be manually rotated downwards, starting from a raised rest position (shown in dotted line in the attached figure), in which the plate-shaped body 8 is substantially horizontal and parallel to the panel 6 (partially shown).

Once rotated downwards, the plate-shaped body 8 shields from light: remaining substantially parallel to the windshield 3, if it is placed in the front position (in dashed line in the attached figure), or substantially parallel to the window 4, if it is placed in the lateral position (in solid line in the attached figure).

The sun visor 7 also comprises a pin 19, which extends along axis 17, is fixed to the plate-shaped body 8 in a position adjacent to the edge 9 and distanced from the connecting device 13, and can be snap coupled in releasable manner to a hook member 20 fixed with respect to the support 14, when the plate-shaped body 8 is placed in the frontal position. The hook member 20 defines a seat that is engaged by the pin 19 pivotably about axis 17.

The edge 12 defines the entrance to a seat 22, which is made inside the plate-shaped body 8 and is engaged by an appendix 23 having a flat shape and being substantially parallel to the plate-shaped body 8.

The appendix 23 can be extracted from the seat 22 towards an operating position, in which it is placed as an extension of the plate-shaped body 8 at the edge 12, i.e. at the side end opposite to the connecting device 13, so as to virtually extend the length of the plate-shaped body 8 and increase the area shielded from light.

When the appendix 23 is withdrawn in the seat 22, only one of its edges 24 remains visible along the edge 12, to be manually grasped and extracted.

According to the invention, during the movement of extraction and reentry with respect to the plate-shaped body 8, the appendix 23 rotates about an axis 28, which extends close to the edge 9 and is orthogonal to the axis 17 and to the appendix 23. Preferably, the axis 28 is defined by a hinge 29, which couples the appendix 23 to the plate-shaped body 8 near the vertex joining the edges 12 and 9.

According to an alternative not shown, the appendix 23 is defined by a circular sector bounded by two curved edges, one convex and one concave, having a center of curvature coincident with the axis 28 and guided, in the seat 22, by corresponding surfaces complementary to the profile of said curved edges.

The sun visor 7 comprises a suitable stop system (not shown) to prevent the appendix 23 from exiting completely from seat 22 and therefore to retain it permanently coupled to the plate-shaped body 8.

In addition, the sun visor 7 comprises a retention system 31, which keeps the appendix 23 in a fixed position with respect to the plate-shaped body 8 in the absence of manual action by the user, so as to avoid that the normal vibrations present in the motor vehicle 1 will extract or insert the appendix 23 in an accidental and unwanted way. The retention system 31 is preferably of a friction type and, for example, is placed at the entrance of the seat 22 or at the hinge 29. Alternatively, the retention system 31 has a snap action, or is of bistable spring type.

When the air-bag device in the longitudinal channel 16 is activated in case of a lateral accident, the appendix 23 could be in the space in which the curtain bag should expand, if it were extracted when the plate-shaped body 8 is placed in the lateral position.

In this situation, the exiting of the curtain bag pushes the edge 24 downwardly with a force F which generates a torque upon the appendix 23 about the rotation axis 28. Said torque automatically returns the appendix 23 in the seat 22. Therefore, the appendix 23 does not inhibit the exiting and expansion of the curtain bag, and is not broken by the curtain bag.

The retention system 31 mentioned above must be chosen or adjusted in an appropriate way to ensure minimal resistance when the appendix 23 is pushed downward by the curtain bag during its expansion.

From the foregoing, it is clear, therefore, that the appendix 23 does not inhibit the expansion of the curtain bag and does not break during said expansion, due to the type of the envisaged coupling and movement.

Owing to the hinge 29, therefore, it is possible to avoid the use of guides, that due to wear, can become a point of inaccurate movement and vibrations of appendix 23.

From the foregoing it appears clear, therefore, that changes and variations can be made to the described and shown sun visor 7 without going beyond the protective scope of the present invention, as defined in the appended claims.

In particular, the external profiles of the appendix 23 and the plate-shaped body 8 shown in the attached figure are to be intended as indicative only. These profiles must be engineered in order to minimize the risk of pinching hair or the user's fingers when the appendix 23 is inserted into the seat 22.

Furthermore, when it is withdrawn and therefore superimposed upon the plate-shaped body 8, the appendix 23 may be visible, instead of providing a seat 22 within the plate-shaped body.

## Claims

1. A motor vehicle sun visor comprising:
a) a plate-shaped body (8) delimited by an upper edge (9) and a bottom edge (10), and by a first side edge (11) and a second side edge (12) opposite to each other;
b) a connecting device (13) placed near a vertex joining said upper edge (9) to said first side edge (11); said connecting device being adapted for being connected to a fixed support (14) so as to swivel about a first rotation axis (15), and being hinged to said plate-shaped body (8) about a second rotation axis (17), which is transverse to the first rotation axis (15) and is substantially parallel to said upper edge (9);
c) a flat appendix (23), which is substantially parallel to said plate-shaped body (8) and is coupled to said plate-shaped body (8) so that it can be manually extracted into an operating position, in which it extends as an extension of said plate-shaped body (8) at said second side edge (12);
**characterized in that** said appendix (23) is coupled to said plate-shaped body (8) rotatably about an axis (28), which extends orthogonal to the plane of said appendix (23) and is arranged near said upper edge (9).

2. The sun visor according to claim 1, **characterized in that** said appendix (23) is coupled to said plate-shaped body (8) by means of a hinge (29) placed near a vertex joining said upper edge (9) and said second side edge (12).

3. The sun visor according to claim 1 or 2, **characterized in that** said appendix (23) comprises an edge (24) that remains visible along said second side edge (12), when said appendix (23) is withdrawn and superimposed to said plate-shaped body (8) .
